## Europäisches Patentamt
## European Patent Office
## Office européen des brevets

(11) Veröffentlichungsnummer: **0 104 518**
**B1**

(12) **EUROPÄISCHE PATENTSCHRIFT**

(45) Veröffentlichungstag der Patentschrift: 09.11.88

(21) Anmeldenummer: 83108902.4

(22) Anmeldetag: 09.09.83

(51) Int. Cl.⁴: **B 32 B 15/06**, B 32 B 7/12, C 09 J 3/00

(54) Verbundstoff mit einer Metallschicht und einer elastomeren Kunststoffschicht und Verfahren zu seiner Herstellung.

(30) Priorität: 29.09.82 DE 3235978

(43) Veröffentlichungstag der Anmeldung:
04.04.84 Patentblatt 84/14

(45) Bekanntmachung des Hinweises auf die
Patenterteilung:
09.11.88 Patentblatt 88/45

(84) Benannte Vertragsstaaten:
AT BE CH DE FR GB IT LI LU NL SE

(56) Entgegenhaltungen:
US-A-4 079 168

CHEMICAL ABSTRACTS, Band 83, Nr. 26, 29.
Dezember 1975, Seite 41, Ref.Nr. 207084q,
Columbus, Ohio, US; & JP - A - 75 92 935
(TAOKA DYESTUFFS MFG. CO.) 24-07-1975

(73) Patentinhaber: Hüls Troisdorf Aktiengesellschaft
Postfach 11 65
D-5210 Troisdorf (DE)

(72) Erfinder: Klaar, Karlo
Unterdorfstrasse 56a
D-5216 Niederkassel-Mondorf (DE)
Erfinder: Kühnel, Werner
Ahornweg 13
D-5206 Neunkirchen-Schöneshof (DE)
Erfinder: Spielau, Paul, Dr.
Van-Gogh-Platz 10
D-5210 Troisdorf-Eschmar (DE)

EP 0 104 518 B1

**Beschreibung**

Die Erfindung bezieht sich auf einen Verbundstoff gemäß dem Oberbegriff des Anspruchs 1 und ein Verfahren zum Herstellen solcher Verbundstoffe gemäß dem Oberbegriff des Anspruchs 3.

Es ist bekannt, Metallbleche mit Kunststoffschichten aus modifizierten Alkydharzen, härtbaren Acrylaten, Weich-PVC u.a. kontinuierlich zu beschichten. Solche Verbundstoffe werden u.a. im Bauwesen angewendet, wo sie beispielsweise die Randverwahrungen von lose verlegten Folien im Hoch- und Tiefbau bilden. Bei der Herstellung dieser Verbundstoffe wird so vorgegangen, daß das blanke Metallband durch ein Phosphatierbad bei Stahl bzw. Chromatierbad bei Aluminium gegen Oxydation geschützt und anschließend durch ein weiteres Bad anodisch aufgeladen bzw. passiviert wird. Nach dieser Vorbehandlung wird in einer ersten Beschichtungszone ein Primer durch Walzenpaare ggf. beidseitig auf das Metallband aufgetragen und ausgehärtet.

In einer zweiten Beschichtungszone erfolgt dann der Auftrag der eigentlichen Kunststoffschicht, meistens einer Weich-PVC-Schicht aus einer Weich-PVC-Paste, die anschließend ausgeliert wird. Zum Stand der Technik verweisen wir auf das Buch von Dr. Paul Schmidt, "Beschichten mit Kunststoffen", Carl Hanser Verlag München 1967, insbesondere Seiten 20 bis 22.

Nicht alle Kunststoffe lassen sich mit Metallen gut verkleben, hier sei nur auf Polyethylen (PE), Polypropylen (PP), Polytetrafluorethylen und Kautschuke wie Ethylen-Propylen-Dien-Terpolymere (EPDM) und Ethylen-Propylen-Copolymere (EPM) hingewiesen, s. beispielsweise Kunststoffberater 7/8, 1982, Seite 16 bis 19.

Aus der US—A—4 079 168 ist ein Verbundstoff aus einer Metallschicht und einer Schicht aus Kunststoff auf Basis von Ethylen-Propylen-Dien-Terpolymeren (EPDM) oder Ethylen-Propylen-Copolymeren (EPM) bekannt, bei dem die Metallschicht auf der Verbundseite einen Primer, insbesondere auf Basis Epoxydharz, aufweist und mittels einer vernetzten Kleberschicht, enthaltend halogenierte Polyolefine, mit der Kunststoffschicht verbunden ist. Die Schicht aus Kunststoff auf der Basis von EPDM oder EPM gemäß US—A—4 079 168 wird während des Klebens gleichzeitig mit dem Kleber vulkanisiert, d.h. ausgehärtet. Weiterhin sind bei dem Klebsystem, das gemäß der US—PS bevorzugt aus zwei verschiedenen Schichten besteht, zwingend aromatische Nitrosoverbindungen vorgeschrieben. Diese aromatischen Nitrosoverbindungen sollen das Vernetzen fördern, da der Verbund mit dem vulkanisierbaren Elastomer unter Druck und Wärme bei gleichzeitiger Aushärtung von Kleberschicht und Elastomer hergestellt wird. Voraussetzung für die Herstellung eines einwandfreien Verbundes nach der Lehre der US—A—4 079 168 ist die Verwendung aromatischer Nitrosoverbindungen und die gleichzeitige Aushärtung von Kleberschicht und Elastomer.

Verbundstoffe gemäß der US—A—4 079 168 sind aufgrund der Vernetzung der Schicht aus Kunststoff nicht verschweißbar.

Die vorveröffentlichte Druckschrift Chemical Abstracts, Bd. 83, Nr. 26; 29. Dez. 75, Seite 41, Ref. Nr. 207084q, beschreibt die Verwendung einer Klebermischung, die u.a. auch chloriertes Polypropylen enthält, zum Verkleben vernetzter EPDM-Kautschuke. Die dabei erzielten Schälfestigkeiten betragen gemäß diesem Referart 5,0 kg pro 20 cm (=12,3 N/5 cm).

Aufgabe der Erfindung ist es, einen haftfesten Verbund zwischen einer Metallschicht und einer Schicht aus Kunststoff auf Basis von Ethylen-Propylen-Dien-Terpolymeren oder Ethylen-Propylen-Copolymeren mit hoher Schälfestigkeit zu schaffen. Weiterhin soll die Schicht aus Kunststoff mit weiteren Schichten insbesondere durch Quellschweißen verbunden werden können.

Die Erfindung löst diese Aufgabe durch einen Verbundstoff gemäß Anspruch 1. Überraschend hat sich herausgestellt, daß ein Verbundstoff mit einer Metallschicht, die auf der Verbundseite mit einem Primer versehen ist, und einer vulkanisationsbeschleunigerfreien Schicht auf Basis EPDM und/oder EPM, die über eine Kleberschicht, enthaltend vernetztes chloriertes Polypropylen, haftfest verbunden sind, die gewünschten Anforderungen erfüllt. Insbesondere bei Einsatz eines Primers auf Basis Epoxydharz oder modifizierten Alkydharzes werden zusammen mit der vernetzten chlorierten Polypropylen-Kleberschicht Schälfestigkeiten von mehr als 200 N je 5 cm für den Verbund erreicht.

Der erfindungsgemäße Einsatz eines Klebers enthaltend eine Kunststofflösung auf Basis von chloriertem Polypropylen sowie Vernetzungsmittel ermöglicht den haftfesten Verbund zwischen Metallblechen bzw. Metallschichten und vulkanisationsbeschleunigerfreien elastomeren Kunststoff auf Basis EPDM und/oder EPM.

Eine bevorzugte Kleberzusammensetzung gemäß der Erfindung enthält 7 bis 30 Gew.-% chloriertes Polypropylen mit einem Chlorgehalt von 20 bis 70%, insbesondere 25 bis 40%, 50 bis 85,5 Gew.-% organische Lösungsmittel, davon mindestens 50% aromatische, cycloaliphatische und/oder halogenierte Kohlenwasserstoffe, 7 bis 20 Gew.-% Vernetzungsmittel insbesondere Schwefel enthaltende Verbindungen, 0,5 bis 5 Gew.-% Vulkanisationsbeschleuniger, 0 bis 8 Gew.-% Vulkanisationsaktivatoren wie Zinkoxyd, Bleioxyd, Manganoxyd, Antimontrisulfid.

Die überraschend gute Haftfestigkeit des erfindungsgemäßen Verbundes unter Einsatz eines vernetzbaren chlorierten Polypropylens war nicht vorhersehbar. Es ist zwar bekannt, daß chloriertes Polypropylen aufgrund der guten Löslichkeit als Lackrohstoff für Chemikalien und korrosionsfeste Anstriche eingesetzt wird und auch die Adhäsion zu Polypropylen verbessert. Der in der erfindungsgemäßen Ausbildung vorgeschlagene Einsatz zum Herstellen von Verbundwerkstoffen aus Metallschichten und elastomeren Kunststoffen mit der erzielbaren hohen Verbundfestigkeit ist daher umso überraschender. Die Verbundwerkstoffe können ohne ein Delaminieren bearbeitet und verformt, beispielsweise gekantet, gebogen oder gestanzt werden.

Gemäß dem Verfahren nach der Erfindung zum Herstellen von Verbundstoffen wird vorgeschlagen, daß man auf die geprimerte Seite der Metallschicht einen vulkanisierbaren Kleber, enthaltend eine Kunststofflösung auf Basis von chloriertem Polypropylen sowie Vernetzungsmittel aufträgt und nach dem Trocknen der Kleberschicht die elastomere Kunststoffschicht aufbringt und bei erhöhten Temperaturen von etwa 70 bis 160°C unter vollständigem Aushärten der Kleberschicht zum Verbundstoff verpreßt. Bevorzugt wird ein Kleber enthaltend 7 bis 30 Gew.-% chloriertes Polypropylen, 50 bis 85,5 Gew.-% organisches Lösungsmittel, 7 bis 20 Gew.-% Vernetzungsmittel, 0,5 bis 5 Gew.-% Vulkanisationsbeschleuniger und 0 bis 8 Gew.-% Vulkanisationsaktivatoren eingesetzt. Der Kleber wird beispielsweise in der Weise hergestellt, daß das chlorierte Polypropylen in einer entsprechenden Menge eines organischen Lösungsmittel für das Polypropylen während einer Zeit von etwa 1 Stunde angequollen wird, und dann unter starkem Rühren gelöst wird. Hierbei ist darauf zu achten, daß die Temperatur beim Rühren nicht über 50°C ansteigen sollte. Anschließend wird diese Kunststofflösung ggf. mit weiteren organischen Lösungsmitteln, die als Verdünner wirken aufgefüllt, das Vernetzungsmittel, der Vulkanisationsbeschleuniger und der Vulkanisationsaktivator zugegeben und durch starkes Rühren in der Kunststofflösung gut dispergiert. Ein so hergestellter Kleber weist eine Lagerstabilität bei Raumtemperatur von mindestens 6 Monaten auf und muß nur vor Gebrauch aufgerührt werden, um ein Absetzen der nicht gelösten Stoffe zu vermeiden.

Gut geeignet ist ein chloriertes Polypropylen mit einem Chlorgehalt von 20 bis 70, vorzugsweise 25 bis 40%. Bevorzugt werden isotaktische chlorierte Polypropylene eingesetzt. Als Lösungsmittel kommen insbesondere die Lösungsmittel für chloriertes Polypropylen, daf sind aromatische, cycloaliphatische und/oder halogenierte Kohlenwasserstoffe in Frage, hierbei bevorzugt Toluol, Xylol, Methylenchlorid, Tetrachlormethan, Trichlorethan, Perchlorethan, Tetrahydrofuran. Es ist auch möglich, für den erfindungsgemäßen Kleber die organischen Lösungsmittel für das chlorierte Polypropylen teilweise durch polare Lösungsmittel, die als Verdünner wirksam werden, zu ersetzen und zwar in Mengen bis zu 50% bezogen auf die Gesamtmenge an Lösungsmittel. Hiervon kommen insbesondere Alkohole, Ketone, Ester in Frage.

Besonders hohe Haftfestigkeit des Verbundes lassen sich erzielen, wenn die Metallschicht mit einem modifizierten Alkydharz, beispielsweise Alkyldmelaminharz oder mit einem Epoxydharz geprimert wird.

Die bevorzugten Vernetzungsmittel für das chlorierte Polypropylen sind Schwefelverbindungen enthaltende Vernetzungsmittel wie Thiuramsulfide, substituierte Harnstoffe, Guanidine, Xanthogenate, Dithiocarbamate, Thiazole, Sulfenamide. Als Vulkanisationsbeschleuniger können substituierte Harnstoffe wie Diphenylthioharnstoff, Trimethylthioharnstoff, Hexamethylentetramin, sekundäre aliphatische oder cycloaliphatische Amine u.a. dem Kleber zugegeben werden. Eine bevorzugte Ausführung des erfindungsgemäßen Verbundstoffes bilden elastomere Schichten auf Basis von Ethylen-Propylen-Dien-Terpolymeren und/oder Ethylen-Propylen-Copolymeren, die vulkanisationsbeschleunigerfrei sind. Eine bevorzugte Zusammensetzung einer solchen elastomeren Schicht enthält 35 bis 46 Gew.-% EPDM und/oder EPM, 40 bis 58 Gew.-% Füllstoffe, hiervon bis zu 50% Ruß, 5 bis 12 Gew.-% Extender o.dgl., 1,0 bis 0,1 Gew.-% Stabilisatoren, Alterungsschutzmittel o.dgl., 5 bis 1,9 Gew.-% Gleitmittel, Verarbeitungshilfsmittel o.dgl.

Zum Herstellen von Verbundblechen, beispielsweise für das Bauwesen werden geprimierte Metallschichten aus Stahl oder Aluminium einer Dicke von 0,25 bis 1,5 mm mit elastomeren Kunststoffschichten aus Folien einer Dicke von 0,5 bis 1,5 mm durch Aushärten der Kleberschicht bei Temperaturen von insbesondere 110 bis 140°C unter Preßdrucken bis zu etwa 70 bar (70 kp/cm$^2$) miteinander verbunden, wobei eine Schälfestigkeit des Verbundstoffes von mindestens 200 N je 5 cm erreicht wird.

Eine vorteilhafte, kontinuierliche Verfahrensweise zum Herstellen des erfindungsgemäßen Verbundstoffes sieht vor, daß auf eine Seite eines Metallbleches ein Primer in einer Menge von 20 bis 40 g/m$^2$ aufgetragen und bei Temperaturen von etwa 170 bis 250°C getrocknet wird, hierauf der vulkanisierbare Kleber in einer Menge von 50 bis 150 g/m$^2$ aufgetragen und bei Temperaturen von etwa 130 bis 220°C getrocknet wird, dann eine elastomere Kunststoffolie mittels Walzen aufkaschiert wird und der Verbundstoff zu Platten geschnitten wird und bei Temperaturen von etwa 110 bis 140°C bei Drucken von etwa 20 bis 70 bar während einer Dauer von etwa 10 bis 60 Minuten abgepreßt wird.

Die Erfindung wird nachfolgend an einem Beispiel und der Zeichnung näher erläutert. Es zeigen Figur 4 ein schematisches Fließbild des Verfahrens zum Herstellen des Verbundstoffes und

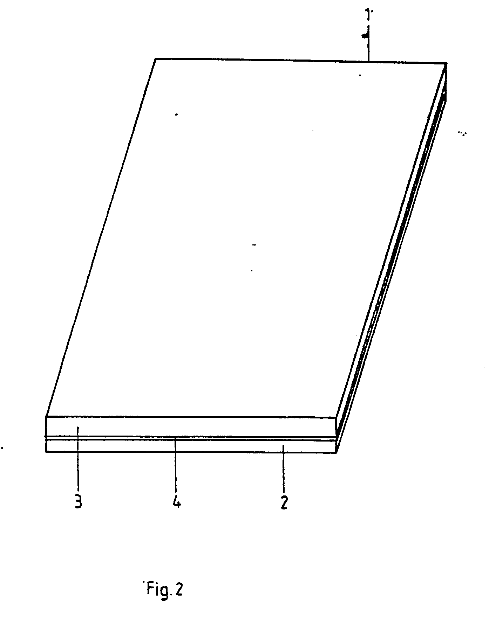

Figur 2 eine Ansicht einer Verbundplatte.

In der Figur 2 ist die Verbundplatte 1 gemäß der Erfindung dargestellt, bestehend aus der Metallschicht 2, beispielsweise einem Aluminiumblech oder Stahlblech. Die Metallschicht 2 ist mit der Kunststoffschicht 3, beispielsweise einer EPDM-Folie über die Kleberschicht aus einem vernetzten chlorierten Polypropylen verbunden, Die Metallschicht ist auf ihrer Verbundseite zur Kleberschicht 4 geprimert und in der Regel auf ihrer Außenseite noch mit einem Schutzlack o.dgl., was hier nicht näher dargestellt ist, versehen.

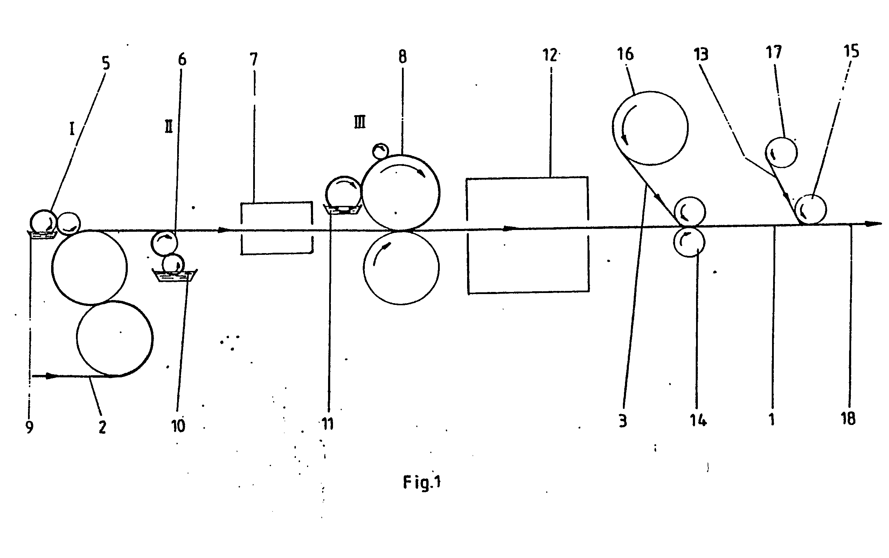

Bie dem in Figur 1 schematisch dargestellten kontinuierlichen Verfahren zum Herstellen von Verbundstoffen, insbesondere Verbundblechen wird ein Stahlblech, beispielsweise in einer Breite von 1000 mm und Dicke von 0,6 mm das bereits passiviert, verzinkt und mit einer Chromschicht überzogen ist, den Beschichtungsstationen I und II zugeführt. In der Beschichtungsstation I wird mittels des Roll Coaters ein Primer 9 auf Basis Epoxydharz aufgetragen, der Auftrag beträgt ca. 25 g/m² naß, so daß sich nach dem Trocknen ein Auftragsgewicht von 5 g/m² ergibt. In der nachfolgenden Beschichtungsstation II wird auf die andere Seite des Stahlbandes 2 ein Schutzlack auf Basis Alkydmelaminharz aufgebracht, ebenfalls mittels eines Roll Coaters in einer Menge von 20 g/m² naß, so daß sich nach dem Trocknen ein Auftragsgewicht von 10 g/m² ergibt. Nach der beidseitigen Beschichtung durchläuft das Stahlband 2 den ersten Trocknungskanal 7 bei einer Temperatur von beispielsweise 220°C. Anschließend wird der Kleber 11 auf die geprimerte Seite des Stahlbandes in der Beschichtungsstation III aufgetragen. Hierfür kann beispielsweise wie dargestellt, ein Reverse Roll Coater 8 benutzt werden, ebenso ist jedoch auch ein Roll Coater oder ggf. nur ein Rakel oder eine Bürste als Auftragseinrichtung benutzbar. Der erfindungsgemäße Kleber wird beispielsweise in einer Menge von 80 g/m² aufgetragen, so daß sich nach dem Trocknen ein Auftrag von 12 g/m² ergibt. Der Kleber enthält beispielsweise 10 Gew.-% chloriertes Polypropylen mit einem Chlorgehalt von 35%, 10 Gew.-% Tetramethylthiuramdisulfid, 1 Gew.-% Diphenylthioharnstoff, 5 Gew.-% Zinkoxyd, 30 Gew.-% Methylisobutylketon und 44 Gew.-% Toluol. Das so beschichtete Stahlband 2 wird dann in dem nachfolgenden Trocknungskanal bei einer Temperatur von 180°C getrocknet und anschließend wird die Kunststoffschicht, eine EPDM-Folie 3 einer Dicke von 0,8 mm zwischen dem Walzenpaar 14 aufkaschiert. Die Folie 3 wird von der Vorratsrolle 16 abgezogen. Nach ausreichender Abkühlung der Verbundbahn 1 wird noch eine Trennfolie 13, beispielsweise eine LD—PE-(Polyethylen niedriger Dichte) oder PP-Folie von 0,03 mm von der Vorratsrolle 17 über die Andrückrolle 15 auf die Verbundbahn 1 aufgebracht und die so ausgerüstete Verbundbahn 1 am Ende 18 bevorzugt aufgewickelt. Die Haftfestigkeit dieses Verbundes ist noch nicht ausreichend, da der Kleber noch nicht vollständig ausgehärtet ist. Aus dem Verbund 1 werden Platten gewünschter Größe geschnitten, die zusammen mit der Trennfolie in Pressen bei erhöhten Temperaturen abgepreßt werden, wobei der Kleber vollständig aushärtet. Beispielsweise werden Etagenpressen benutzt, wobei mehrere Lagen Verbundplatten gleichzeitig auf Temperaturen z.B. von 120 bis 130°C aufgeheizt und bei dieser Temperatur für etwa eine halbe Stunde gehalten werden, wobei der Preßdruck 30 bar beträgt. Die abgepreßten und in der Kleberschicht ausgehärteten Verbundplatten wiesen eine Schälfestigkeit von 250 N je 5 cm auf.

Die Trennfolie, beispielsweise eine PP-Folie bleibt während des Preßvorganges auf den Platten und verhindert auch das Blocken beim Stapeln der Verbundplatten und braucht erst bei Einsatz der Verbundplatte beispielsweise an der Baustelle abgezogen zu werden.

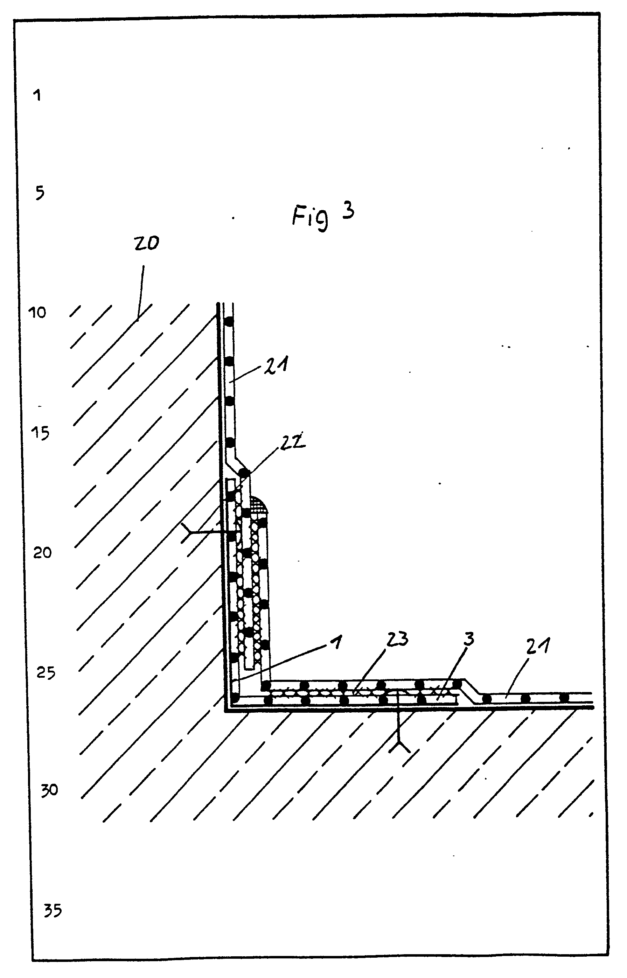

Ein bevorzugtes Anwendungsgebiet für das erfindungsgemäße Verbundmaterial sind Verbundbleche im Hoch- und Tiefbau, als Randverwahrungen, Winkelprofile o.dgl. zum dichten Anschließen und Fixieren von Dichtungsbahnen aus elastomeren Kunststoffen. Bevorzugt enthalten die Dichtungsbahnen den gleichen elastomeren Kunststoff wie die Kunststoffschicht des Verbundmaterials, so daß eine homogene, insbesondere Schweißverbindung, ermöglicht ist. In der Figur 3 ist ein Ausführungsbeispiel für die Anwendung dargestellt. Das Betonbecken 20 wird mit der Dichtungsbahn 21 aus EPDM ausgekleidet. Im Eckbereich ist das Verbundblech 1 in Gestalt eines Winkelprofiles mittels Dübeln 22 am Betonbecken 20 befestigt. Die Dichtungsbahn 21 ist mit der elastomeren Kunststoffschicht 3 aus EPDM im Bereich 23 haftfest und dicht quellverschweißt.

**Patentansprüche**

1. Verbundstoff mit einer Metallschicht (2) und einer Schicht (3) aus Kunststoff auf Basis von Ethylen-Propylen-Dien-Terpolymeren oder Ethylen-Propylen-Copolymeren, bei dem die Metallschicht auf der Verbundseite einen Primer, insbesondere auf Basis Epoxydharz, härtbarer Acrylate oder modifizierter Alkydharze aufweist und mittels einer vernetzten Kleberschicht (4), enthaltend halogenierte Polyolefine, mit der Schicht (3) aus Kunststoff verbunden ist, dadurch gekennzeichnet, daß der Kunststoff auf Basis von Ethylen-Propylen-Dien-Terpolymeren oder Ethylen-Propylen-Copolymeren vulkanisationsbeschleunigerfrei ist und die Kleberschicht (4) aus vernetztem chloriertem Polypropylen besteht.

2. Verbundstoff nach Anspruch 1, dadurch gekennzeichnet, daß auf der Metallschicht (2) ein Primer auf Basis Epoxydharz oder modifizierter Alkydharze aufgebracht ist.

3. Verfahren zum Herstellen von Verbundstoffen nach einem der Ansprüche 1 oder 2, bei dem die geprimerte Seite einer mindestens einseitig geprimerten Metallschicht und eine Schicht aus elastomerem Kunststoff auf Basis von Ethylen-Propylen-Dien-Terpolymeren und/oder Ethylen-Propylen-Copolymeren miteinander verbunden werden, dadurch gekennzeichnet, daß man auf die geprimerte Seite der Metallschicht einen vulkanisierbaren Kleber, enthaltend eine Kunststofflösung auf Basis von chloriertem Polypropylen sowie Vernetzungsmittel, aufträgt und nach dem Trocknen der Kleberschicht den elastomeren, vulkanisationsbeschleunigerfreien Kunststoff aufbringt und bei Temperaturen von 70 bsi 160°C unter vollständigem Aushärten der Kleberschicht zum Verbundstoff verpreßt.

4. Verfahren nach Anspruch 3, dadurch gekennzeichnet, daß ein Kleber enthaltend 7 bis 30 Gew.-% chloriertes Polypropylen, 50 bis 85,5 Gew.-% organische Lösungsmittel, 7 bis 20 Gew.-% Vernetzungsmittel, 0,5 bis 5 Gew.-% Vulkanisationsbeschleuniger und 0 bis 8 Gew.-% Vulkanisationsaktivatoren aufgetragen wird.

5. Verfahren nach Anspruch 3 oder 4, dadurch gekennzeichnet, daß ein chloriertes Polypropylen mit einem Chlorgehalt von 20 bis 70% verwendet wird.

6. Verfahren nach Anspruch 5, dadurch gekennzeichnet, daß ein chloriertes Polypropylen mit einem Chlorgehalt von 25 bis 40% verwendet wird.

7. Verfahren nach einem der Ansprüche 3 bis 6, dadurch gekennzeichnet, daß als organische Lösungsmittel aromatische Kohlenwasserstoffe, cycloaliphatische Kohlenwasserstoffe und/oder halogenierte Kohlenwasserstoffe eingesetzt werden.

8. Verfahren nach Anspruch 7, dadurch gekennzeichnet, daß Toluol, Xylol, Methylenchlorid, Tetrachlormethan, Trichlorethan, Perchlorethan und/oder Tetrahydrofuran eingesetzt werden.

9. Verfharen nach Anspruch 7 oder 8, dadurch gekennzeichnet, daß dem Lösungsmittle als Verdünner polare Lösungsmittel wie Alkohole, Ketone oder Ester in Mengen bis zu 50%, bezogen auf die Gesamtmenge Lösungsmittel, zugegeben werden.

10. Verfahren nach einem der Ansprüche 3 bis 9, dadurch gekennzeichnet, daß eine mit einem modifizierten Alkydharz, härtbaren Acrylaten oder Epoxydharz geprimerte Metallschicht verwendet wird.

11. Verfahren nach einem der Ansprüche 3 bis 10, dadurch gekennzeichnet, daß dem Kleber als Vernetzungsmittel schwefelhaltige Verbindungen zugegeben werden.

12. Verfahren nach Anspruch 11, dadurch gekennzeichnet, daß als schwefelhaltige Verbindungen Thiuramsulfide, substituierte Harnstoffe, Guanidine, Xanthogenate, Dithiocarbamate, Thiazole und/oder Sulfonamide zugegeben werden.

13. Verfahren nach einem der Ansprüche 3 bis 12, dadurch gekennzeichnet, daß dem Kleber als Vulkanisationsbeschleuniger substituierte Harnstoffe zugegeben werden.

14. Verfahren nach einem der Ansprüche 3 bis 13, dadurch gekennzeichnet, daß eine Schicht aus elastomeren Kunststoff, enthaltend 35 bis 46 Gew.-% Ethylen-Propylen-Dien-Terpolymer und/oder Ethylen-Propylen-Copolymer, 40 bis 58 Gew.-% Füllstoffe mit einem Anteil von bis zu 50 Gew.-% Ruß, 5 bis 12 Gew.-% Extender, 1,0 bis 0,1 Gew.-% Stabilisatoren, Alterungsschutzmittel und 5 bis 1,9 Gew.-% Gleitmittel oder Verarbeitungshilfsmittel eingesetzt wird.

15. Verfahren nach einem der Ansprüche 3 bis 14, dadurch gekennzeichnet, daß eine geprimerte Metallschicht aus Stahl oder Aluminium einer Dicke von 0,25 bis 1,5 mm mit einer Folie einer Dicke von 0,5 bis 1,5 mm aus dem elastomeren Kunststoff bei Temperaturen von 110 bis 140°C unter Preßdrücken bis 70 bar (70 kp/cm²) miteinander verpreßt werden.

16. Verfahren nach einem der Ansprüche 3 bis 15, dadurch gekennzeichnet, daß auf eine Seite einer Metallschicht ein Primer in einer Menge von 20 bis 40 g/m² aufgetragen, bei Temperaturen von 170 bsi 250°C getrocknet, hierauf der vulkanisierbare Kleber in einer Menge von 50 bis 150 g/m² aufgetragen, bei Temperaturen von 130 bis 220°C getrocknet, dann eine Folie aus elastomeren Kunststoff mittels Walzen aufkaschiert, der Verbundstoff zu Platten geschnitten und bei Temperaturen von 110 bis 140°C bei Drücken von 20 bis 70 bar während einer Dauer von 10 bis 60 Minuten gepreßt wird.

17. Kleber zum Herstellen eines Verbundstoffes aus einer geprimerten Metallschicht und einer Schicht aus elastomerem, vulkanisationsbeschleunigerfreiem Kunststoff auf Basis Ethylen-Propylen-Dien-Terpolymer und/oder Ethylen-Propylen-Copolymer, dadurch gekennzeichnet, daß der Kleber 7 bis 30 Gew.-% chloriertes Polypropylen mit einem Chlorgehalt von 20 bis 70%, 50 bis 85,5 Gew.-% organische Lösungsmittel, davon mindestens 50% aromatische, cycloaliphatische und/oder halogenierte Kohlenwasserstoffe, 7 bis 20 Gew.-% Vernetzungsmittel, 0,5 bis 5 Gew.-% Vulkanisationsbeschleuniger und 0 bis 8 Gew.-% Vulkanisationsaktivatoren enthält.

## Revendications

1. Matériau composite comportant une couche métallique (2) et une couche (3) de matière plastique à base de terpolymères éthylène/propylène/diène ou de copolymères éthylène/propylène, dans lequel la couche métallique présente sur le côté de juxtaposition un primaire, en particulier à base de résine époxy, d'acrylates durcissables ou de résines alkyde modifiées, et est liée à la couche (3) de matière plastique au moyen d'une couche d'adhésif réticulé (4) contenant des polyoléfines halogénées, caractérisé par le fait que la matière plastique à base de terpolymères éthylène/propylène/diène ou de copolymères éthylène/propylène est exempte d'accélérateurs de vulcanisation, et la couche d'adhésif (4) est constituée de polypropylène chloré réticulé.

2. Matériau composite selon la revendication 1, caractérisé par le fait qu'un primaire à base de résine époxy ou de résines alkyde modifiées est appliqué sur la couche métallique (2).

3. Procédé pour la production de matériaux composites selon l'une des revendications 1 ou 2, dans lequel on assemble l'un avec l'autre le côté, revêtu d'un primaire, d'une couche métallique revêtue d'un primaire au moins d'un côté, et une couche de matière plastique élastomère à base de terpolymères éthylène/propylène/diène et/ou de copolymères éthylène/propylène, caractérisé par le fait que l'on applique sur le côté, revêtu d'un primaire, de la couche métallique, un adhésif vulcanisable, contenant une solution de matière plastique à base de polypropylène chloré et un agent de réticulation, et après le séchage de la couche d'adhésif, on applique la matière plastique élastomère, exempte d'accélérateurs de vulcanisation, et on obtient le matériau composite par pressage à des températures de 70 à 160°C, avec durcissement complet de la couche d'adhésif.

4. Procédé selon la revendication 3, caractérisé par le fait que l'on applique un adhésif contenant de 7 à 30% en poids de propylène chloré, de 50 à 85,5% en poids de solvants organiques, de 7 à 20% en poids d'agent de réticulation, de 0,5 à 5% en poids d'accélérateurs de vulcanisation et de 0 à 8% en poids d'activateurs de vulcanisation. -

5. Procédé selon la revendication 3 ou 4, caractérisé par le fait que l'on utilise un polypropylène chloré ayant une teneur en chlore de 20 à 70%.

6. Procédé selon la revendication 5, caractérisé par le fait que l'on utilise un polypropylène chloré ayant une teneur en chlore de 25 à 40%.

7. Procédé selon l'une des revendications 3 à 6, caractérisé par le fait que l'on utilise en tant que solvants organiques des hydrocarbures aromatiques, des hydrocarbures cycloaliphatiques et/ou des hydrocarbures halogénés.

8. Procédé selon la revendication 7, caractérisé par le fait que l'on utilise le toluène, le xylène, le chlorure de méthylène, le tétrachlorométhane, le trichloroéthane, le perchloroéthaen et/ou le tétrahydrofuranne.

9. Procédé selon la revendication 7 ou 8, caractérisé par le fait que l'on ajoute au solvant, en tant que diluant, des solvants polaires tels que des alcools, des cétones ou des esters, en quantités allant jusqu'à 50%, par rapport à la quantité totale de solvant.

10. Procédé selon l'une des revendications 3 à 9, caractérisé par le fait que l'on utilise une couche métallique revêtue d'un primaire constitué d'une résine alkyde modifiée, d'acrylates durcissables ou de résine époxy.

11. Procédé selon l'une des revendications 3 à 10, caractérisé par le fait que l'on ajoute à l'adhésif, en tant qu'agent de réticulation, des composés soufrés.

12. Procédé selon la revendication 11, caractérisé par le fait que l'on ajoute en tant que composés soufrés des sulfures de thiurame, des urées substituées, des guanidines, des xanthogénates, des dithiocarbamates, des thiazoles et/ou des sulfonamides.

13. Procédé selon l'une des revendications 3 à 12, caractérisé par le fait que l'on ajoute à l'adhésif, en tant qu'accélérateurs de vulcanisation, des urées substituées.

14. Procédé selon l'une des revendications 3 à 13, caractérisé par le fait que l'on utilise une couche de matière plastique élastomère contenant 35 à 46% en poids d'un terpolymère éthylène/propylène/diène et/ou d'un copolymère éthylène/propylène, 40 à 58% en poids de charges contenant jusqu'à 50% en poids de noir de fumée, 5 à 12% en poids d'extendeurs, 1,0 à 0,1% en poids de stabilisants, agents de protection contre le vieillissement, et 5 à 1,9% en poids de lubrifiants ou d'auxiliaires de mise en oeuvre.

15. Procédé selon l'une des revendications 3 à 14, caractérisé par le fait que l'on presse ensemble une couche métallique en acier ou aluminium, d'une épaisseur de 0,25 à 1,5 mm, revêtue d'un primaire, et une couche de la matière plastique élastomère, d'une épaisseur de 0,5 à 1,5 mm, à des températures de 110 à 140°C, en utilisant pour le pressage des pressions allant jusqu'à 70 bars (70 kp/cm²).

16. Procédé selon l'une des revendications 3 à 15, caractérisé par le fait que l'on applique sur un côté d'une couche métallique un primaire en une quantité de 20 à 40 g/m², on le sèche à des températures de 170 à 250°C, on applique sur celui-ci l'adhésif vulcanisable, en une quantité de 50 à 150 g/m², on sèche à des températures de 130 à 220°C, puis on applique au moyen de rouleaux une feuille de matière plastique élastomère, on découpe le matériau composite en plaques et on le presse à des températures de 110 à 140°C, pendant une durée de 10 à 60 minutes, à des pressions de 20 à 70 bars.

17. Adhésif pour la production d'un matériau composite à base d'une couche métallique, revêtu d'un primaire, et d'une couche de matière plastique élastomère à base de terpolymère éthylène/propylène/diène et/ou de copolymère éthylène/propylène, exempte d'accélérateurs de vulcanisation, caractérisé par le fait que l'adhésif contient de 7 à 30% en poids de polypropylène chloré ayant une teneur en chlore de 20 à 70%, de 50 à 85,5% en poids de solvants organiques, dont au moins 50% d'hydrocarbures aromatiques, cycloaliphatiques et/ou halogénés, de 7 à 20% en poids d'agents de réticulation, de 0,5 à 5% en poids d'accélérateurs de vulcanisation, et de 0 à 8% en poids d'activateurs de vulcanisation.

**Claims**

1. Composite material with a metal layer (2) and a layer (3) of ethylene-propylene-diene-terpolymer or ethylene-propylene-copolymer based synthetic resin, in which the metal layer exhibits on the bound side a primer, in particular epoxy resin, hardenable acrylate or modified alkyd resin based primer and is connected with the synthetic resin layer (3) by means of a cross-linked adhesive layer (4) containing halogenated polyolefins, characterised in that the ethylene-propylene-diene terpolymer or ethylene-propylene copolymer based synthetic resin is free from vulcanisation accelerator free and the adhesive layer (4) consists of cross-linked chlorinated polypropylene.

2. Composite material according to claim 1, characterised in that an epoxide resin or modified alkyd resin based primer is applied to the metal layer (2).

3. Process for the production of composite materials according to one of claims 1 or 2, in which the primed side of a metal layer primed at least on one side and a layer of ethylene-propylene-diene terpolymer and/or ethylene-propylene copolymer based elastomeric synthetic resin are connected with one another, characterised in that a vulcanisable adhesive containing a solution chlorinated polypropylene based synthetic resin as well as cross-linking agent is applied to the primed side of the metal layer and, after drying of the adhesive layer, the elastomeric vulcanisation accelerator-free synthetic resin is applied and there is pressing at temperatures of 70 to 160°C while undergoing complete hardening of the adhesive layer to form the composite material.

4. Process according to claim 3, characterised in that an adhesive containing 7 to 30% by weight chlorinated polypropylene, 50 to 85.5% by weight of organic solvent, 7 to 20% by weight of cross-linking agent, 0.5 to 5% by weight of vulcanisation accelerator and 0 to 8% by weight of vulcanisation activators is applied.

5. Process according to claim 3 or 4, characterised in that a chlorinated polypropylene with a chlorine content of 20 to 70% is used.

6. Process according to claim 5, characterised in that a chlorinated polypropylene with a chlorine content of 25 to 40% is used.

7. Process according to one of claims 3 to 6, characterised in that aromatic hydrocarbons, cycloaliphatic hydrocarbons and/or halogenated hydrocarbons are employed as organic solvents.

8. Process according to claim 7, characterised in that toluene, xylene, methylene chloride, carbon tetrachloride, trichloroethane, perchloroethane and/or tetrahydrofuran are employed.

9. Process according to claim 7 or 8, characterised in that polar solvents such as alcohol, ketones or esters are supplied to the solvent as diluents in amounts of up to 50%, related to the total amount of solvent.

10. Process according to one of claims 3 to 9, characterised in that a metal layer primed with a modified alkyd resin, hardenable acrylates or epoxide resin is used.

11. Process according to one of claims 3 to 10, characterised in that sulphur containing compounds are added to the adhesive as cross-linking agent.

12. Process according to claim 11, characterised in that thiuram sulphide, substituted ureas, guanidines, xanthogenates, dithiocarbamates, thiazoles and/or sulphonamides are added as sulphur containing compounds.

13. Process according to one of claims 3 to 12, characterised in that substituted ureas are added to the adhesive as vulcanisation accelerators.

14. Process according to one of claims 3 to 13, characterised in that a layer of elastomeric synthetic resin containing 35 to 46% by weight of ethylene-propylene-diene-terpolymer and/or ethylene-propylene copolymer, 40 to 58% by weight of fillers with a content of up to 50% by weight carbon black, 5 to 12% by weight extenders, 1.0 to 0.1% by weight of stabilisers, antioxidants and 5 to 1.9% by weight of lubricants or processing auxiliaries is employed.

15. Process according to one of claims 3 to 14, characterised in that a primed metal layer of steel or aluminium having a thickness of 0.25 to 1.5 mm and a foil of the elastomeric synthetic resin having a thickness of 0.5 to 1.5 mm are pressed together at temperatures of 110 to 140°C under applied pressures of 70 bar (70 kp/cm$^2$).

16. Process according to one of claims 3 to 15, characterised in that a primer is applied to one side of the metal layer in an amount of 20 to 40 g/m$^2$, it is dried at temperatures of 170 to 250°C, the vulcanisable adhesive is applied thereto in an amount of 50 to 150 g/m$^2$, it is dried at temperatures of 130 to 220°C, then a foil of elastomeric synthetic resin is laminated by means of rollers, the composite material is cut into plates and is compressed at temperatures of 110 to 140°C under pressures of 20 to 70 bar over a period of 10 to 60 minutes.

17. Adhesive for the production of a composite material from a primed metal layer and a layer of elastomeric vulcanisation accelerator-free synthetic resin based on ethylene-propylene-diene terpolymer and/or ethylene-propylene copolymer, characterised in that the adhesive contains 7 to 30%, by weight of chlorinated polypropylene with a chlorine content of 20 to 70%, 50 to 85.5% by weight of organic solvent, at least 50% thereof being aromatic, cycloaliphatic and/or halogenated hydrocarbons, 7 to 20% by weight of cross-linking agents, 0.5 to 5% by weight of vulcanisation accelerators and 0 to 8% by weight of vulcanisation activators.

Fig.1

0 104 518

Fig. 2

Fig 3